# EUROPEAN PATENT APPLICATION

(11) **EP 4 697 655 A1**
(43) Date of publication of application: **18.02.2026**
(21) Application number: 24807336.3
(22) Date of filing: 19.03.2024
(51) Int. Cl.: H04L 12/28, G10L 15/22, G06F 40/00

(54) **METHOD FOR MANAGING INTEGRATED MAP FOR INDOOR SPACE AND ELECTRONIC DEVICE PERFORMING SAME**

(30) Priority: 12.05.2023 KR 20230061735
(71) Applicant: Samsung Electronics Co., Ltd., Suwon-si, Gyeonggi-do 16677 (KR)
(72) Inventor: KANG, Byeongcheol, Suwon-si, Gyeonggi-do 16677 (KR); RYU, Heechang, Suwon-si, Gyeonggi-do 16677 (KR); PARK, Chiyoun, Suwon-si, Gyeonggi-do 16677 (KR); PARK, Hyunseo, Suwon-si, Gyeonggi-do 16677 (KR); CHOI, Inkwon, Suwon-si, Gyeonggi-do 16677 (KR)
(74) Representative: Gulde & Partner
(86) International application number: PCT/KR2024/003451
(87) International publication number: WO 2024/237455

(57) **Abstract**

Provided is a method performed by a first electronic device, including receiving, from a third electronic device, an integrated map of an indoor space including the first electronic device and at least one second electronic device, adjusting, based on the integrated map, a task set to be performed by the first electronic device, collecting first surrounding information about the indoor space while the adjusted task is performed, and transmitting, to the third electronic device (300), the collected first surrounding information to update the integrated map.

## Description

### Technical Field

The present disclosure relates to a method of managing an integrated map of an indoor space, and an electronic device performing the same.

### Background Art

The Internet has evolved from a human-based connection network, where humans create and consume information, to an Internet of things (IoT) network, where distributed configurations, such as objects, exchange information with each other to process the information. Internet of everything (IoE) technology is emerging, in which technology related to the IoT is combined with, for example, technology for processing big data through connection with a cloud server. IoT may be applied to fields such as smart home appliances, smart homes, smart buildings, and smart cities, through convergence and integration between existing information technology (IT) technologies and various industries.

In an IoT environment, electronic devices that are connected to each other may collect, generate, analyze, or process data, and share the data with each other to use the data for tasks of respective electronic devices. Recently, with the rapid development of artificial intelligence, various types of electronic devices that use artificial neural networks have been developed. Accordingly, interest in connectivity between various types of electronic devices in the IoT environment is growing.

### DISCLOSURE OF INVENTION

### Solution to Problem

A method performed by a first electronic device, according to an embodiment of the present disclosure, may include receiving, from a third electronic device, an integrated map of an indoor space including the first electronic device and at least one second electronic device.

In an embodiment, the method may include adjusting, based on the integrated map, a task set to be performed by the first electronic device.

In an embodiment, the method may include collecting first surrounding information about the indoor space while the adjusted task is performed.

In an embodiment, the method may include transmitting, to the third electronic device 300, the collected first surrounding information to update the integrated map.

A method performed by a third electronic device, according to an embodiment of the present disclosure, may include receiving, from a first electronic device, first surrounding information about an indoor space, collected by the first electronic device.

In an embodiment, the method may include updating, based on the received first surrounding information, an integrated map about the indoor space including the first electronic device and at least one second electronic device.

In an embodiment, the integrated map may include second surrounding information about the indoor space, obtained by the third electronic device from the at least one second electronic device.

A first electronic device according to an embodiment of the present disclosure may include a communicator, a sensor unit, memory storing one or more instructions, and at least one processor configured to execute the one or more instructions stored in the memory.

In an embodiment, the at least one processor may be further configured to execute the one or more instructions to cause the first electronic device to receive, from a third electronic device through the communicator, an integrated map of an indoor space including the first electronic device and at least one second electronic device.

In an embodiment, the at least one processor may be further configured to execute the one or more instructions to cause the first electronic device to adjust a task set to be performed by the first electronic device, based on the integrated map.

In an embodiment, the at least one processor may be further configured to execute the one or more instructions to cause the first electronic device to collect, through the sensor unit, first surrounding information about the indoor space while the adjusted task is performed.

In an embodiment, the at least one processor may be further configured to execute the one or more instructions to cause the first electronic device to transmit, to the third electronic device through the communicator, the collected first surrounding information so as to update the integrated map.

A third electronic device according to an embodiment of the present disclosure may include a communicator, memory storing one or more instructions, and at least one processor configured to execute the one or more instructions stored in the memory.

In an embodiment, the at least one processor may be further configured to execute the one or more instructions to cause the third electronic device to receive, from a first electronic device through the communicator, first surrounding information about an indoor space, collected by the first electronic device.

In an embodiment, the at least one processor may be further configured to execute the one or more instructions to cause the third electronic device to update, based on the received first surrounding information, an integrated map of the indoor space including the first electronic device and at least one second electronic device.

In an embodiment, the integrated map may include second space information about the indoor space, obtained by the third electronic device from the at least one second electronic device.

### BRIEF DESCRIPTION OF DRAWINGS

FIG. 1 is a diagram for describing an Internet of things (IoT) system in an indoor space where a plurality of electronic devices are connected to each other.
FIG. 2 is a block diagram showing a configuration of an electronic device, according to an embodiment of the present disclosure.
FIG. 3 is a block diagram showing a configuration of an electronic device, according to an embodiment of the present disclosure.
FIG. 4 is a diagram for describing a method by which electronic devices manage an integrated map of an indoor space, according to an embodiment of the present disclosure.
FIG. 5 illustrates an example of an integrated map according to an embodiment of the present disclosure.
FIG. 6 is a diagram for describing a method by which a first electronic device adjusts a task, according to an embodiment of the present disclosure.
FIG. 7 is a diagram for describing a method by which a third electronic device updates an integrated map, according to an embodiment of the present disclosure.
FIG. 8 is a diagram for describing a method by which electronic devices manage an integrated map by reflecting a user request, according to an embodiment of the present disclosure.
FIG. 9 is a diagram for describing a method by which a third electronic device updates an integrated map, according to an embodiment of the present disclosure.
FIG. 10A is a diagram for describing an example in which electronic devices reflect a user request to an integrated map and use the integrated map, according to an embodiment of the present disclosure.
FIG. 10B is a diagram for describing an example in which electronic devices reflect a user request to an integrated map and use the integrated map, according to an embodiment of the present disclosure.

### MODE FOR THE INVENTION

Throughout the present disclosure, the expression "at least one of a, b or c" indicates only "a", only "b", only "c", both "a and b", both "a and c", both "b and c", all of "a, b, and c", or variations thereof.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. In addition, in certain cases, terms which can be arbitrarily selected by the applicant in particular cases. In such a case, the meaning of the terms will be described in detail at the corresponding portion in the description of the present disclosure. Thus, the terms used herein have to be understood based on the meaning of the terms together with the description throughout the specification.

While such terms as "first", "second", etc., may be used to describe various components, such components are not limited to the above terms. These terms are only used to distinguish one component from another component. For example, without departing from the scope of the rights described in embodiments, a first component may be referred to as a second component, and similarly, a second component may be referred to as a first component.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

Unless the context clearly indicates otherwise, it may be understood that the singular forms "a," "an," and "the" include plural objects. Accordingly, for example, the expression "component surface" may also indicate one or more such surfaces.

An expression used in the singular may encompass the expression in the plural, unless it has a clearly different meaning in the context. Terms used herein, including technical or scientific terms, may have the same meaning as commonly understood by one of ordinary skill in the art described in the present specification.

In the present disclosure, it is to be understood that terms such as "including" or "having", etc., are intended to indicate the existence of the features, numbers, steps, actions, components, parts, or combinations thereof described in the present disclosure, and are not intended to preclude the possibility that one or more other features, numbers, steps, actions, components, parts, or combinations thereof may exist or may be added.

In the present disclosure, regarding an element represented as a "-er (or)", "unit", or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

Any function or operation described in the present disclosure may be processed by one processor or a combination of processors. A processor or a combination of processors may include circuitry configured to perform processing, such as an application processor (AP), a communication processor (CP), a graphical processing unit (GPU), a neural processing unit (NPU), a microprocessor unit (MPU), a system-on-chip (SoC), or an integrated chip (IC).

In the present disclosure, a function related to artificial intelligence may operate through a processor and memory. The processor may be configured as one or more processors. In this case, the one or more processors may be a general-purpose processor such as a central processing unit (CPU), an application processor (AP), or a digital signal processor (DSP), a dedicated graphics processor such as a graphics processing unit (GPU) or a vision processing unit (VPU), or a dedicated artificial intelligence processor such as a neural processing unit (NPU). The one or more processors may process input data according to predefined operation rules or an artificial intelligence model stored in memory. Alternatively, when the one or more processors are a dedicated artificial intelligence processor, the dedicated artificial intelligence processor may be designed with a hardware structure specialized for processing a specific artificial intelligence model.

The predefined operation rules or artificial intelligence model may be generated via training. This may mean that the predefined operation rules or artificial intelligence model set to perform desired characteristics (or purposes) are generated by training a basic artificial intelligence model with a learning algorithm that utilizes a large number of training data. A training process may be performed by a device for performing artificial intelligence or a separate server and/or system. Examples of the learning algorithm may include supervised learning, unsupervised learning, semi-supervised learning, and reinforcement learning, but are not limited thereto.

The artificial intelligence model may include a plurality of neural network layers. Each of the neural network layers includes a plurality of weight values, and performs a neural network arithmetic operation via an arithmetic operation between an arithmetic operation result of a previous layer and the plurality of weight values. The plurality of weight values included in each of the neural network layers may be optimized by a result of training an artificial intelligence model. For example, the plurality of weight values may be updated to reduce or minimize a loss value or a cost value obtained by the artificial intelligence model during the training process. The artificial neural network may include a deep neural network (DNN), for example, a graphic neural network (GNN), a graph convolution network (GCN), a graph attention network (GAT), a gated graph sequence neural network (GGS-NN), a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks (DQN), but is not limited thereto.

In the present disclosure, a machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

In the present disclosure, it should be understood that combinations of blocks in each flowchart and combinations of flowcharts may be performed by one or more computer programs including computer-executable instructions. One or more computer programs may be stored entirely in single memory or may be divided and stored in a plurality of different memories.

According to an embodiment, a method according to various embodiments disclosed in the present specification may be provided by being included in a computer program product. The computer program product is a product that can be traded between sellers and buyers. The computer program product may be distributed in the form of a machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or memory of a relay server.

Hereinafter, embodiments of the present disclosure will be described in detail with reference to the accompanying drawings such that one of ordinary skill in the art may easily implement the embodiments of the present disclosure. However, the present disclosure may be implemented in various different forms and is not limited to the embodiment described herein.

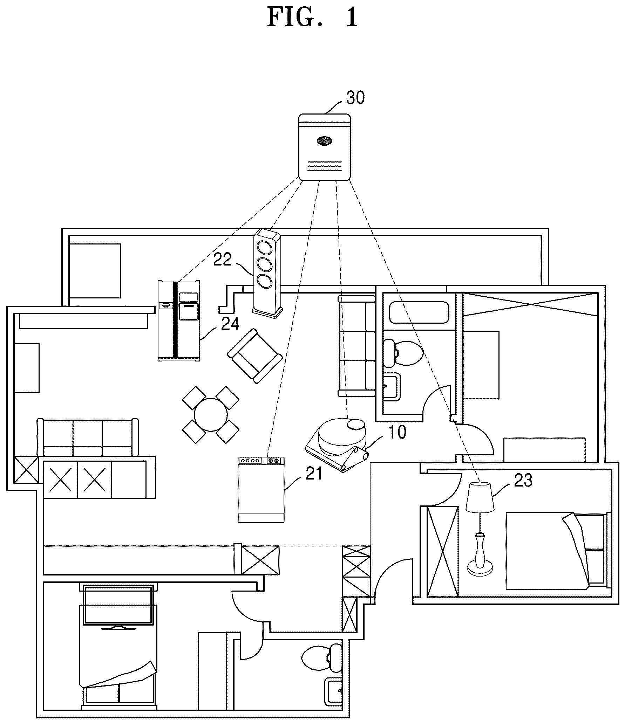

FIG. 1 is a diagram for describing an Internet of things (IoT) system in an indoor space where a plurality of electronic devices are connected to each other.

Various electronic devices included in the indoor space may perform respective tasks. For example, a robot cleaner 10, an air purifier 21, an air conditioner 22, a night lamp 23, and a refrigerator 24 may be included in the indoor space. The robot cleaner 10 may suck up dust on a floor while moving around a living room, a bedroom, a kitchen, and the like. The air purifier 21 may be located in the living room and absorb pollutants in surrounding air. The air conditioner 22 may be located in the living room and operate to maintain a temperature of a space at a temperature set by a user. The night lamp 23 may be located in the bedroom and turned on or off by the user in the bedroom at night. The refrigerator 24 may be located in the kitchen and adjust an internal temperature to prevent food stored in the refrigerator 24 from going bad.

The electronic devices may include various sensors for obtaining information necessary to perform tasks. For example, the robot cleaner 10 may include a sensor for detecting an object in the surroundings. The air purifier 21 may include a sensor for detecting a level of pollution in surrounding air, and the air conditioner 22 may include a sensor for detecting a temperature of the indoor space and a sensor for measuring a level of pollution of surrounding air. The night lamp 23 may include a sensor for detecting whether there is a person in the surroundings and/or a sensor for detecting brightness of the surroundings, and the refrigerator 24 may include a sensor for detecting a temperature of an internal space.

The electronic devices may exchange data with a server 30 in a wired or wireless communication manner. The data exchanged between the electronic devices and the server 30 may include physical information, such as a type, a location, and a size of each electronic device, information about a task of each electronic device, and surrounding information collected by each electronic device by using a sensor. For example, the robot cleaner 10 may exchange, with the server 30, physical information such as a current location of the robot cleaner 10, information about a task, such as a cleaning time, a cleaning area, and a cleaning order, and surrounding information collected by using a sensor, such as a location of the user and a location of a table. The air purifier 21 may exchange, with the server 30, physical information such as a current location of the air purifier 21, information about a task, such as an operating time and an operating mode, and surrounding information collected by using a sensor, such as a level of pollution of surrounding air. The air conditioner 22 may exchange, with the server 30, physical information such as a current location of the air conditioner 22, information about a task, such as an operating time, a set temperature, and an operating mode, and surrounding information collected by using a sensor, such as a temperature of the indoor space. The night lamp 23 may exchange, with the server 30, physical information such as a current location of the night lamp 23, information about a task, such as a bedtime of the user, and surrounding information collected by using a sensor, such as a location of the user. The server 30 may generate an integrated map of the indoor space, based on pieces of data received from the electronic devices.

The integrated map may be realized as a graph including nodes representing electronic devices and/or objects included in the indoor space, and edges connecting the nodes to each other. Each edge may include a weight vector determined based on a relationship between electronic devices and/or objects corresponding to two connected nodes. The relationship between the electronic devices and/or the objects may include at least one of physical information of each electronic device and/or object (e.g., a type, a location, or a size), information about tasks of the electronic devices (e.g., operating modes or operating times), surrounding information collected by the electronic devices by using the sensors (e.g., a level of pollution of surrounding air), or information about interconnectivity between the electronic devices and/or the objects. The weight vector may include values or vectors respectively corresponding to the above pieces of information.

For example, the interconnectivity between the electronic devices and/or the objects may indicate a degree of physical distance between the electronic devices and/or the objects in the indoor space and/or a degree of functional similarity between the electronic devices. For example, when two electronic devices are physically close, a value corresponding to interconnectivity between the two electronic devices may be large. In another example, a value corresponding to interconnectivity between two electronic devices may be determined between 0 to 1 depending on a degree of physical distance between the two electronic devices and/or a degree of functional similarity between the two electronic devices. The interconnectivity between the electronic devices and/or the objects may be determined based on physical information of each electronic device and/or object, information about tasks of the electronic devices, and surrounding information measured by the electronic devices by using sensors.

The server 30 may transmit the integrated map to the electronic devices so that the electronic devices may use the integrated map when performing tasks. For example, the robot cleaner 10 may receive the integrated map from the server 30 and determine a cleaning route based on information included in the integrated map.

The server 30 may receive information about the indoor space from the electronic devices, and update the integrated map by using the received information. The information about the indoor space may include information about a task of each electronic device, surrounding information collected by each electronic device by using a sensor, and the like. For example, the surrounding information collected by the electronic device by using the sensor may include information about a structure of the indoor space, such as locations, areas, shapes, and distances of the living room, the bedroom, and the kitchen. Also, the information collected by the electronic device by using the sensor may include information about an object (e.g., a person or a table) located in the indoor space, such as a person in the bedroom and a table in the living room. Also, the information collected by the electronic device by using the sensor may include information about an environment of the indoor space, such as changes in day and night, changes in brightness of the bedroom due to lighting, a level of pollution in the air of the living room, and a lot of cat hair on a floor of the living room.

For example, the server 30 may receive surrounding information (e.g., a lot of cat hair on the floor of the living room) measured by the robot cleaner 10 while moving around the indoor space, and update the integrated map based on the information. The server 30 may receive information about a level of pollution of the indoor space, measured by the air purifier 21 and the air conditioner 22, and update the integrated map based on the information. The server 30 may receive, from a television (TV) (not shown), information about a time when the TV is on, and update the integrated map based on the information. The updating of the integrated map may include deleting an existing node, adding a new node, modifying a weight vector included in an existing edge, and calculating a weight vector to be included in a new edge.

The server 30 may update the integrated map by using an artificial neural network. For example, a graphic neural network (GNN), a graph convolution network (GCN), a graph attention network (GAT), or a gated graph sequence neural network (GGS-NN) may be used as an artificial neural network for updating the integrated map, but an embodiment is not limited thereto, and a convolutional neural network (CNN), a recurrent neural network (RNN), a restricted Boltzmann machine (RBM), a deep belief network (DBN), a bidirectional recurrent deep neural network (BRDNN), or a deep Q-network (DQN) may be used.

The electronic devices may receive the updated integrated map from the server 30, and adjust a task based on the updated integrated map. The electronic devices may extract information about respective tasks from weight vectors of edges connected to respective nodes in the updated integrated map, and change or delete a pre-set task or add a new task, based on the extracted information. A rule about how a task is adjusted based on the information extracted from the updated integrated map may be pre-defined in each electronic device. For example, the air purifier 21 may receive, from the server 30, the updated integrated map including information collected by the robot cleaner 10 while cleaning the indoor space (e.g., a lot of cat hair on the floor of the living room), and activate a pet care function. The robot cleaner 10 may receive the updated integrated map including information about a level of pollution of the indoor space, measured by the air purifier 21 and the air conditioner 22, and determine a cleaning route or adjust dust suction strength. The robot cleaner 10 may receive the updated integrated map including information about a time when the TV is on, and determine a cleaning route or adjust a cleaning time.

As such, the server 30 may generate and manage the integrated map while exchanging various types of information with the electronic devices, and the electronic devices may receive the integrated map from the server 30, obtain information collected by other electronic devices from the integrated map, and adjust tasks by using the information. Because the server generates and manages the integrated map including various types of information, each electronic device may use, when performing a task, information obtained by another electronic device including a sensor that is not provided therein. For example, the air purifier 21, the air conditioner 22, the night lamp 23, and the washing machine 24, which are static electronic devices, are able to obtain, through the integrated map, information collected by the robot cleaner 10, which is a dynamic electronic device, and use the information, while moving around the indoor space, thereby compensating for issues of various types of information being difficult to be obtained due to fixed locations in the indoor space. In addition, the dynamic electronic device is able to obtain, through the integrated map, information collected by the static electronic device located in different places, and use the information, without having to collect the information at corresponding places, and thus, the dynamic electronic device may perform a task faster or omit separate movement for collecting information.

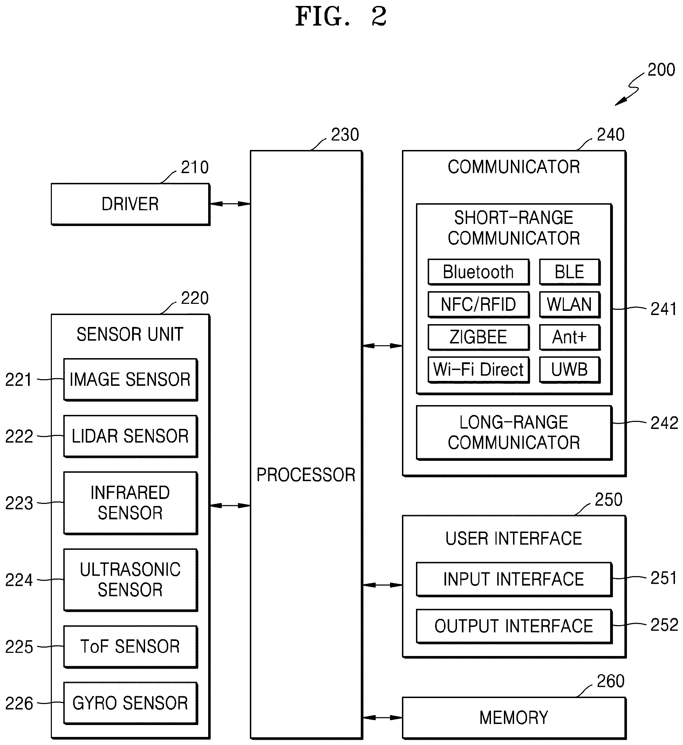

FIG. 2 is a block diagram showing a configuration of an electronic device 200, according to an embodiment of the present disclosure.

The electronic device 200 according to an embodiment of the present disclosure may perform a pre-set task in an indoor space. For example, the electronic device 200 may include one of the robot cleaner 10, the air purifier 21, the air conditioner 22, the night lamp 23, or the refrigerator 24 illustrated in FIG. 1, but is not limited thereto. In another example, the electronic device 200 may include any type of assistant robot or mobile device, which is driven for user convenience, an augmented reality (AR) device, a virtual reality (VR) device, or a device that detects a surrounding environment and provides a certain service at a specific location or in a specific space.

Referring to FIG. 2, the electronic device 200 according to an embodiment of the present disclosure may include a driver 210, a sensor unit 220, a processor 230, a communicator 240, a user interface 250, and memory 260.

In an embodiment, the driver 210 may include components used by the electronic device 200 to perform a task.

For example, when the electronic device 200 is a robot cleaner, the driver 210 may include a suction unit, a driving unit, and the like, but is not limited thereto.

The suction unit has a function of collecting dust on a floor while sucking-in air, and may include, but is not limited to, a rotating brush or broom, a rotating brush motor, an air suction hole, a filter, a dust collection chamber, and an air discharge hole. The suction unit may be provided as a structure in which a brush that additionally sweeps dust from corners is rotated.

The driving unit may include, but is not limited to, a motor that rotates each wheel provided in the electronic device 200, and a timing belt provided to transmit power generated from the wheel.

In an embodiment, the sensor unit 220 may include a plurality of sensors configured to detect information about a surrounding environment of the electronic device 200. For example, the sensor unit 220 may include, but is not limited to, an image sensor 221, a light detection and ranging (LiDAR) sensor 222, an infrared sensor 223, an ultrasonic sensor 224, a time-of-flight (ToF) sensor 225, and a gyro sensor 226.

The image sensor 221 may include a stereo camera, a mono camera, a wide-angle camera, an around-view camera, or a 3-dimensional (3D) vision sensor.

The LiDAR sensor 222 may detect a distance to an object and various physical properties by radiating a laser beam onto a target. The LiDAR sensor 222 may be used to detect a surrounding object, a terrain feature, and the like and model the same as a 3D image.

The infrared sensor 223 may include one of an active infrared sensor that detects changes by radiating infrared rays and blocking light and a passive infrared sensor that does not include a light emitter and only detects changes in infrared rays received from the outside. For example, an infrared proximity sensor may be provided around the wheel of the electronic device 200 and used as a fall prevention sensor by irradiating infrared rays to the floor and receiving the same.

The ultrasonic sensor 224 may measure a distance to an object by using ultrasonic waves and emit and detect ultrasonic pulses that convey information about proximity of the object. The ultrasonic sensor 224 may be used to detect a nearby object and a transparent object.

The ToF sensor 225 may obtain a 3D effect and movement of an object by calculating a distance of light emitted to the object being bounced back, according to time. The ToF sensor 225 enables high-level object recognition in complex spaces, dark places, and even obstacles in front of the eyes, thereby enabling the electronic device 200 to avoid obstacles.

The gyro sensor 226 may detect an angular speed. The gyro sensor 226 may be used to measure a location and set a direction of the electronic device 200.

In an embodiment, the processor 230 may execute a programmed software module or instructions stored in the memory 260 to control an operation or a function such that the electronic device 200 performs a task. The processor 230 may include a hardware component performing arithmetic operations, logic operations, input/output operations, and signal processing. The processor 230 may execute one or more instructions stored in the memory 260 to control general operations in which the electronic device 200 manages an integrated map. The processor 230 may execute programs stored in the memory 260 to control the driver 210, the sensor unit 220, the communicator 240, and the user interface 250.

In an embodiment, the processor 230 is a component configured to control a series of processes for the electronic device 200 to operate, and may include one or more processors. The one or more processors included in the processor 230 may include circuitry such as a system-on-chip (SoC) or an integrated circuit (IC). The one or more processors included in the processor 230 may include a general-purpose processor, such as a central processing unit (CPU), an application processor (AP), or a digital signal processor (DSP), a graphic-dedicated processor, such as a graphics processing unit (GPU) or a vision processing unit (VPU), or an artificial intelligence-dedicated processor, such as a neural processing unit (NPU). For example, when the one or more processors include an artificial intelligence-dedicated processor, the artificial intelligence-dedicated processor may be designed with a hardware structure specialized for processing a specific artificial intelligence model.

For example, the processor 230 may be configured as at least one of a central processing unit (CPU), a micro-processor, a graphics processing unit (GPU), an application specific integrated circuit (ASIC), a digital signal processor (DSP), a digital signal processing device (DSPD), a programmable logic device (PLD), a field programmable gate array (FPGA), an application processor (AP), a neural processing unit, or an artificial intelligence-dedicated processor designed in a hardware structure specialized for processing of an artificial intelligence model, but is not limited thereto. Each processor included in the processor 230 may be a dedicated processor for performing a certain function.

In an embodiment, an artificial intelligence processor may perform operations and control by using an artificial intelligence model so as to process a task set to be performed by the electronic device 200. The artificial intelligence processor may be manufactured in the form of an artificial intelligence dedicated hardware chip or manufactured as a part of a general-purpose processor (e.g., a CPU or an application processor) or a graphic-dedicated processor (e.g., a GPU) to be mounted on the electronic device 200.

In an embodiment, the communicator 240 may include one or more components enabling the electronic device 200 to communicate with an external device. For example, the communicator 240 may include, but is not limited to, a short-range communicator 241 and a long-range communicator 242.

The short-range communicator 241 may include, but is not limited to, a Bluetooth communicator, a Bluetooth low energy (BLE) communicator, a near field communicator, a wireless local area network (WLAN) (Wi-Fi) communicator, a Zigbee communicator, an Ant+ communicator, a Wi-Fi direct (WFD) communicator, an ultra-wideband (UWB) communicator, an Infrared Data Association (IrDA) communicator, or a microwave (uWave) communicator.

In an embodiment, the user interface 250 may include an input interface 251 and an output interface 252. The user interface 250 may be in the form in which the input interface 251 and the output interface 252 are separated or in the form in which the input interface 251 and the output interface 252 are integrated, like a touch screen. The user interface 250 may receive input information from a user and provide output information to the user.

The input interface 251 may be a unit into which data for the user to control the electronic device 200 is input. For example, the input interface 251 may include a key pad or a touch pad (contact electrostatic capacitance type, pressure resistive film type, infrared detection type, surface ultrasonic conduction type, integral tension measurement type, piezo-effect type, or the like). In addition, the input interface 251 may include a jog wheel or a jog switch, but is not limited thereto.

The output interface 252 may output an audio signal, a video signal, or a vibration signal, and the output interface 252 may include a display unit, an audio output unit, and a vibration motor.

The display unit may display information processed by the electronic device 200. For example, the display unit may display an interface for receiving manipulation of the user. When the display unit and a touch pad form a layer structure to be configured as a touch screen, the display unit may be used as an input device as well as an output device. The display unit may include at least one of a liquid crystal display, a thin-film transistor-liquid crystal display, an organic light-emitting diode, a flexible display, a 3D display, or an electrophoretic display. According to an embodiment of the electronic device 200, the electronic device 200 may include two or more display units.

The sound output unit may output audio data stored in the memory 260. The sound output unit may output an audio signal related to a function performed by the electronic device 200. The sound output unit may include a speaker, a buzzer, or the like.

The vibration motor may output a vibration signal. For example, the vibration motor may output a vibration signal corresponding to output of audio data or video data. The vibration motor may output a vibration signal when a touch is input on a touch screen.

In an embodiment, the memory 260 may store a program for processing and control by the processor 230, and may store data (e.g., an integrated map, space information, or a user request) input to or output from the electronic device 200. The memory 260 may store instructions, data structures, and program codes, which may be read by the processor 230. According to embodiments, operations performed by the processor 230 may be implemented by executing program instructions or codes stored in the memory 260.

For example, the memory 260 may include flash memory type memory, hard disk type memory, multimedia card micro type memory, or card type memory (for example, secure digital (SD) or extreme digital (XD) memory), and may include non-volatile memory including at least one of read-only memory (ROM), electrically erasable programmable read-only memory (EEPROM), programmable read-only memory (PROM), magnetic memory, magnetic disk, or optical disk, and volatile memory, such as random access memory (RAM) or static random access memory (SRAM).

In an embodiment, the memory 260 may store at least one instruction and/or program causing the electronic device 200 to perform a task.

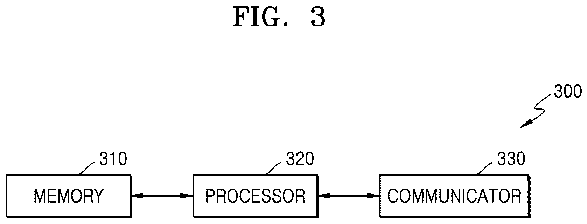

FIG. 3 is a block diagram showing a configuration of an electronic device 300, according to an embodiment of the present disclosure.

The electronic device 300 according to an embodiment of the present disclosure may generate and manage an integrated map. For example, the electronic device 300 may correspond to the server 30 illustrated in FIG. 1, but is not limited thereto.

Referring to FIG. 3, the electronic device 300 according to an embodiment of the present disclosure may include memory 310, a processor 320, and a communicator 330. The memory 310, the processor 320, and the communicator 330 respectively correspond to the memory 260, the processor 230, and the communicator 240 illustrated in FIG. 2, and thus, detailed descriptions about functions and operations thereof are omitted herein.

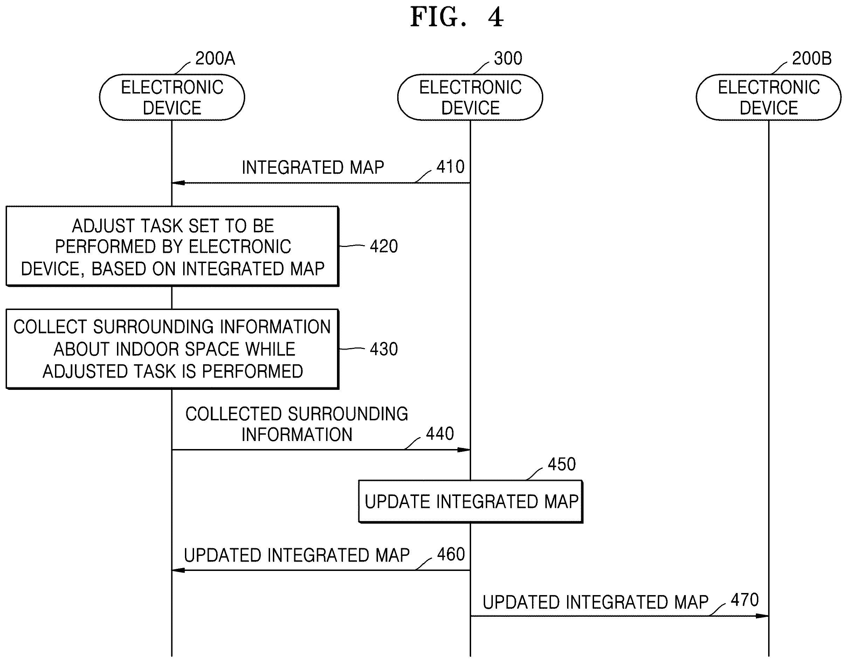

FIG. 4 is a diagram for describing a method by which electronic devices manage an integrated map of an indoor space, according to an embodiment of the present disclosure. In FIG. 4, an electronic device 200B may be an electronic device different from an electronic device 200A, and the electronic device 300 may be a server, but an embodiment is not limited thereto. For example, the electronic device 200A may be a dynamic electronic device and the electronic device 200B may be a static electronic device. In FIG. 4 and descriptions below, operations performed by the electronic device 200A in relation to an integrated map may be identically performed by the electronic device 200B. Hereinafter, for convenience of description, the electronic devices will be respectively referred to as a first electronic device 200A, a second electronic device 200B, and a third electronic device 300.

In an embodiment, the first electronic device 200A may receive, from the third electronic device 300, an integrated map of an indoor space including the first electronic device 200A and at least one second electronic device 200B (operation 410).

In an embodiment, the integrated map may include information about a relationship between the first electronic device 200A and the second electronic device 200B. For example, the information about the relationship between the first electronic device 200A and the second electronic device 200B may include at least one of physical information of the first electronic device 200A and the second electronic device 200B, information about tasks of the first electronic device 200A and the second electronic device 200B, surrounding information collected by the first electronic device 200A and the second electronic device 200B by using sensors, or information about interconnectivity between the first electronic device 200A and the second electronic device 200B.

In an embodiment, the integrated map may be realized in the form of a graph including a plurality of nodes representing the first electronic device 200A and the at least one second electronic device 200B, and a plurality of edges connecting the plurality of nodes to each other. In this case, each of the plurality of edges includes a weight vector determined based on a relationship between electronic devices corresponding to two connected nodes. For example, an edge connecting a node representing the first electronic device 200A and a node representing the second electronic device 200B may include a weight vector determined based on the information about the relationship between the first electronic device 200A and the second electronic device 200B. For example, the weight vector may include weight values respectively corresponding to the physical information of the first electronic device 200A and the second electronic device 200B, the information about tasks of the first electronic device 200A and the second electronic device 200B, the surrounding information collected by the first electronic device 200A and the second electronic device 200B by using sensors, and the information about interconnectivity between the first electronic device 200A and the second electronic device 200B.

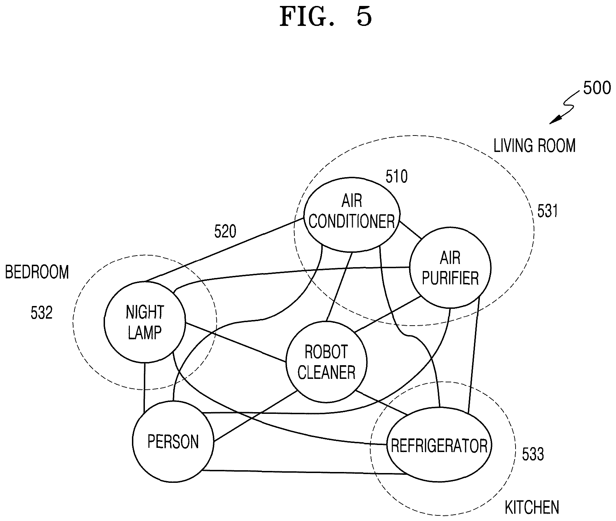

The integrated map will be described in detail below with reference to FIG. 5.

In an embodiment, the first electronic device 200A may adjust a task set to be performed by the first electronic device 200A, based on the integrated map (operation 420). The first electronic device 200A may extract, from the integrated map, information associated with its task, and change or delete a pre-set task or add a new task, based on the extracted information. A rule about how a task is adjusted based on the information extracted from the integrated map may be pre-defined in memory of the first electronic device 200A.

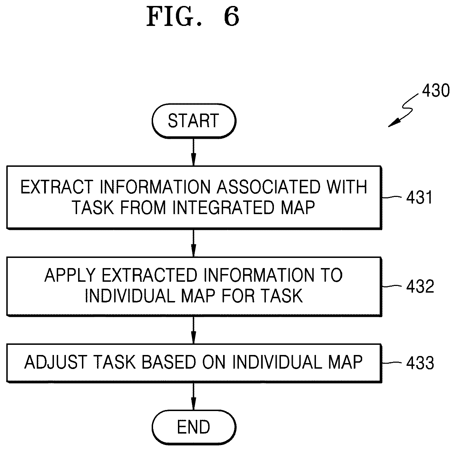

For example, when the first electronic device 200A is a robot cleaner and the second electronic device 200B is an air purifier, the first electronic device 200A may extract data about a level of pollution, collected by the second electronic device 200B, from the received integrated map, and determine a cleaning route or adjust a dust suction strength, based on the extracted data about a level of pollution. Detailed processes of operation 420 will be described below with reference to FIG. 6.

In an embodiment, the first electronic device 200A may collect surrounding information about the indoor space while the adjusted task is performed (operation 430). Information collected by an electronic device by using a sensor may include information about a structure of an indoor space, information about an object located in the indoor space, and information about an environment of the indoor space. For example, when the first electronic device 200A is a robot cleaner, the first electronic device 200A may collect surrounding information, such as "a lot of cat hair on a floor of a living room" or "there is a person in a bedroom", while cleaning the indoor space.

In an embodiment, the first electronic device 200A may transmit, to the third electronic device 300, the collected surrounding information so as to update the integrated map (operation 440). In addition, the first electronic device 200A may transmit, to the third electronic device 300, the information about the task of the first electronic device 200A. For example, when the first electronic device 200A is a robot cleaner, the first electronic device 200A may transmit, to the third electronic device 300, the surrounding information collected in operation 430 and/or the information about the task adjusted in operation 420.

In an embodiment, the third electronic device 300 may receive, from the first electronic device 200A, the surrounding information about the indoor space, collected by the first electronic device 200A (operation 440). In addition, the third electronic device 300 may receive, from the first electronic device, the information about the task of the first electronic device 200A.

In an embodiment, the third electronic device 300 update the integrated map of the indoor space including the first electronic device 200A and the at least one second electronic device 200B, based on the received surrounding information (operation 450). Here, the updating of the integrated map may include deleting an existing node, adding a new node, and/or modifying a weight vector included in an edge. For example, when a person who went out returns home and is in a bedroom, the first electronic device 200A may collect information indicating that "there is a person in a bedroom" and transmit the same to the third electronic device 300. The third electronic device 300 may add, to the integrated map, a new node representing the person and edges connecting other existing nodes and the node representing the person, based on the information. In another example, when the first electronic device 200A is a robot cleaner, the third electronic device 300 may modify, based on the information indicating "a lot of cat hair on a floor of a living room", received from the first electronic device 200A, weight vectors included edges connecting a node representing a living room to other nodes.

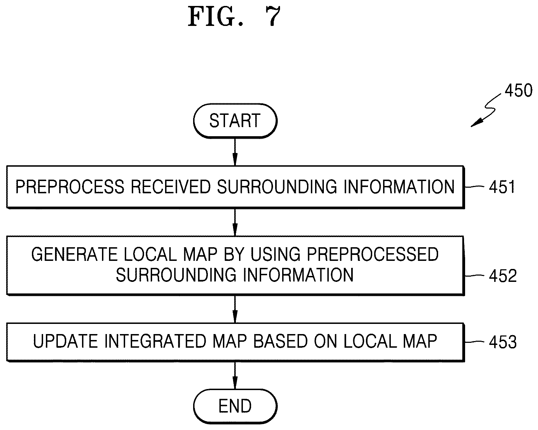

The third electronic device 300 may use an artificial neural network to update the integrated map. For example, GNN, GCN, GAT, GGS-NN, or the like, which is easy to process data in the form of a graph, may be used as an artificial neural network for updating the integrated map, but an embodiment is not limited thereto. Updating of an integrated map 500 will be described below with reference to FIG. 7.

In an embodiment, the third electronic device 300 may transmit the updated integrated map to the first electronic device 200A and the second electronic device 200B (operations 460 and 470). The first electronic device 200A and the second electronic device 200B may perform operations 420, 430, and 440 on the updated integrated map, and the third electronic device 300 may update the updated integrated map again based on space information received from the first electronic device 200A and the second electronic device 200B. For example, when the first electronic device 200A is a robot cleaner and the second electronic device 200B is an air purifier, the second electronic device 200B may extract information indicating "a lot of cat hair on a floor of a living room", based on the updated integrated map received from the third electronic device 300, and activate a pet care function based on the information.

FIG. 5 illustrates an example of the integrated map 500 according to an embodiment of the present disclosure.

In an embodiment, the integrated map 500 may be realized in the form of a graph including a plurality of nodes 510 representing the first electronic device 200A and at least one second electronic device, and a plurality of edges 520 connecting the plurality of nodes to each other. For example, as shown in FIG. 5, the integrated map 500 may include a plurality of nodes respectively representing a robot cleaner, a night lamp, an air conditioner, an air purifier, and a refrigerator, and a plurality of edges connecting the plurality of nodes to each other. A method of realizing the integrated map 500 is not limited to a graph, and the integrated map 500 may be realized in any form including various types of information described below.

In an embodiment, each edge 520 may include a weight vector determined based on a relationship between electronic devices corresponding to two connected nodes. Here, the relationship between the electronic devices may include at least one of physical information of each electronic device (e.g., a type, a location, or a size), information about tasks of the electronic devices (e.g., an operating mode or an operating time), surrounding information collected by the electronic devices by using sensors, or information about interconnectivity between the electronic devices. In an embodiment, the weight vector may include values or vectors respectively corresponding to the above pieces of information.

For example, the surrounding information collected by the electronic device by using the sensor may include information about a structure of an indoor space, such as locations, areas, shapes, and distances of a living room, a bedroom, and a kitchen. Also, the surrounding information collected by the electronic device by using the sensor may include information about an object (e.g., a person or a table) located in the indoor space, such as a person in the bedroom and a table in the living room. Also, the surrounding information collected by the electronic device by using the sensor may include information about an environment of the indoor space, such as changes in day and night, changes in brightness of the bedroom due to lighting, a level of pollution in the air of the living room, and a lot of cat hair on a floor of the living room.

For example, the interconnectivity between the electronic devices may indicate a degree of physical distance between the electronic devices, a degree of functional similarity between the electronic devices, a degree of association of surrounding information collected by the electronic devices with each other's tasks, and/or frequency of exchanging data between the electronic devices. The information about the interconnectivity between the electronic devices may be determined based on the physical information of each electronic device, the information about the tasks of the electronic devices, and/or the surrounding information collected by the electronic devices by using the sensors. For example, the closer the first electronic device 200A and the second electronic device 200B physically, the grater a value corresponding to interconnectivity between the two electronic devices. In another example, the value corresponding to the interconnectivity between the two electronic devices may be determined as a value between 0 and 1, depending on a degree of functional similarity between the first electronic device 200A and the second electronic device 200B.

In an embodiment, the integrated map 500 may include information about the first electronic device 200A, information about the second electronic device 200B, and information about the interconnectivity between the first electronic device 200A and the second electronic device 200B.

In an embodiment, the information about the first electronic device 200A may include the physical information of the first electronic device 200A, such as a type, a location, or a size, the information about the task of the first electronic device 200A, or the surrounding information collected by the first electronic device 200A.

The information about the task of the first electronic device 200A may vary depending on the type of the first electronic device 200A, and for example, when the first electronic device 200A is a robot cleaner, the information about the task of the first electronic device 200A may include a cleaning time, a cleaning area, and/or a cleaning route.

The surrounding information collected by the first electronic device 200A may vary depending on a sensor included in the first electronic device 200A, and for example, when the first electronic device 200A is a robot cleaner including an image sensor, space information collected by the first electronic device 200A may include presence or a location of an object (e.g., a person or a table) in the indoor space.

In an embodiment, the information about the second electronic device 200B may include the physical information of the second electronic device 200B, such as a type, a location, or a size, the information about the task of the second electronic device 200B, or space information collected by the second electronic device 200B.

The information about the task of the second electronic device 200B may vary depending on the type of the second electronic device 200B, and for example, when the second electronic device 200B is an air purifier, the information about the task of the second electronic device 200B may include an operating time or an operating mode.

The surrounding information collected by the second electronic device 200B may vary depending on a sensor included in the second electronic device 200B, and for example, when the second electronic device 200B is an air purifier including a sensor that measures a level of pollution, the surrounding information collected by the second electronic device 200B may include a level of pollution, a level of fine dust, and presence or concentration of harmful gases around the second electronic device 200B.

In an embodiment, the information about the interconnectivity between the first electronic device 200A and the second electronic device 200B may include, but is not limited to, a degree of physical distance between the first electronic device 200A and the second electronic device 200B, a degree of functional similarity between the first electronic device 200A and the second electronic device 200B, a degree of association between pieces of data collected by the first electronic device 200A and the second electronic device 200B, or frequency of exchanging data between the first electronic device 200A and the second electronic device 200B.

In an embodiment, the information about the interconnectivity between the first electronic device 200A and the second electronic device 200B may be determined based on the information about the first electronic device 200A and the information about the second electronic device 200B.

In an embodiment, the integrated map 500 may further include at least one node representing at least one object (e.g., a person or a table) in the indoor space, and at least one edge connecting the at least one node to other nodes. The at least one edge may include a weight vector determined based on a relationship between the object and the electronic device corresponding to two connected nodes. Here, the relationship between the object and the electronic device may include at least one of physical information of the object and the electronic device (e.g., a type, a location, or a size), information about a task of the electronic device (e.g., an operating mode or an operating time), surrounding information collected by the electronic device by using a sensor, or information about interconnectivity between the object and the electronic device. In an embodiment, the weight vector may include values or vectors respectively corresponding to the above pieces of information.

For example, the interconnectivity between the object and the electronic device may include a degree of physical distance between the object and the electronic device, a degree of association between a task of the electronic device and the object, and the like. The information about the interconnectivity between the object and the electronic device may be determined based on the physical information of the object and the electronic device, the information about the task of the electronic device, and/or the surrounding information collected by the electronic device by using the sensor.

In an embodiment, a node and an edge, which are associated with at least one object, may be added to the integrated map 500 according to operation 450 of updating the integrated map 500. For example, when a robot cleaner collects, as space information, information indicating that there is a person in a bedroom while cleaning, and transmits the same to a server, the server may update the integrated map 500 by adding a node representing the person and edges representing associations between the person and other electronic devices.

In an embodiment, the integrated map 500 may be configured such that a plurality of local maps 531, 532, and 533 are combined with each other. Here, a local map may be understood as a sub-graph including at least one node representing electronic devices and objects included in a portion (e.g., a living room, a bedroom, or a kitchen) of the indoor space, and at least one edge connecting the at least one node to other nodes. For example, the integrated map 500 may be configured such that a local map 531 corresponding to a living room, a local map 532 corresponding to a bedroom, and a local map 533 corresponding to a kitchen are combined with each other. The local map 531 corresponding to the living room may include nodes respectively representing an air conditioner and an air purifier, the local map 532 corresponding to the bedroom may include a node representing a night lamp, and the local map 533 corresponding to the kitchen may include a node representing a refrigerator. A method by which the server configures the plurality of local maps 531, 532, and 533 and then configures the integrated map 500 by combining the same may reduce a computational burden of the server. For example, when the server receives, from the robot cleaner, information indicating that there is a person in a bedroom, the server may first generate the local map 532 of the bedroom and update the integrated map 500 based thereon, instead of updating the entire integrated map 500.

FIG. 6 is a diagram for describing a method by which the first electronic device 200A adjusts a task, according to an embodiment of the present disclosure.

In an embodiment, the first electronic device 200A may extract, from the integrated map 500, information associated with a task (operation 431). The first electronic device 200A may extract the information associated with its task from a weight vector of an edge connected to a node representing itself in the integrated map 500. For example, when the first electronic device 200A is a robot cleaner, the first electronic device 200A may extract, from the integrated map 500, information such as a level of pollution in an indoor space, a location of an object (e.g., a person or a table), or whether a TV is on. The first electronic device 200A may consider the extracted information when adjusting a cleaning route, a cleaning time, or dust suction strength.

In an embodiment, the first electronic device 200A may apply the extracted information to an individual map for the task (operation 432). Here, the individual map may be data about the indoor space, the data being separate from the integrated map 500 and generated and managed by the first electronic device 200A to perform its task. For example, the individual map may include a space map having a hierarchical structure including a base layer providing information about a basic structure of the indoor space, such as a wall, a pillar, and a passage, a semantic map layer providing semantic information on the base layer, and a real-time layer providing information about at least one object in the indoor space.

Operation 432 may be omitted when the first electronic device 200A does not use the separate individual map to perform its task. In this case, the first electronic device 200A may immediately adjust the task based on the information extracted from the integrated map 500.

In an embodiment, the first electronic device 200A may adjust the task based on the individual map (operation 433). A rule about how a task is adjusted based on the information extracted from the integrated map may be pre-defined in memory of the first electronic device 200A. Alternatively, the rule about how a task is adjusted based on the information extracted from the integrated map may be set by the user, and the user may set the rule for adjusting a task through a user interface of the first electronic device 200A or a user terminal (e.g., a smartphone, a smart watch, a tablet PC, or a PC) connected to the first electronic device 200A through a wired or wireless network.

For example, when the first electronic device 200A is a robot cleaner, the first electronic device 200A may adjust a task according to the pre-defined rule such that dust suction strength is increased for a space where a level of pollution is high, noise is reduced near a person, or a space with a TV is excluded from a cleaning route when the TV is on and cleaning is performed when the TV is off.

FIG. 7 is a diagram for describing a method by which the third electronic device 300 updates an integrated map, according to an embodiment of the present disclosure.

In an embodiment, the third electronic device 300 may preprocess the received surrounding information (operation 451). Operation 451 may be understood as an operation of converting raw data collected by the first electronic device 200A into a suitable form to configure the integrated map 500. Accordingly, a detailed preprocessing method may vary depending on a format of the raw data.

In an embodiment, operation 451 may be performed by the first electronic device 200A. In other words, according to an implementation method, the first electronic device 200A may transmit raw data of the collected surrounding information to the third electronic device 300, or may preprocess the raw data and then transmit the same to the third electronic device 300. For example, in implementation, a subject performing operation 451 may be determined based on computational capabilities of the first electronic device 200A and the third electronic device 300.

In an embodiment, the third electronic device 300 may generate a local map by using the preprocessed surrounding information (operation 452). Here, a local map may be understood as a sub-graph including at least one node representing electronic devices and objects included in a portion (e.g., a living room, a bedroom, or a kitchen) of the indoor space, and at least one edge connecting the at least one node to other nodes. A weight vector to be included in an edge of the local map may be calculated based on the surrounding information received from the first electronic device 200A. The calculated weight vector may denote similarity between two connected nodes. Here, similarity between nodes may indicate, for example, a degree of effects exchanged between objects and/or electronic devices represented by the two nodes, and the higher the similarity (i.e., the higher a value corresponding to a weight vector), the closer a distance between the two nodes.

For example, when the first electronic device 200A has transmitted, to the third electronic device 300, the surrounding information indicating that "there is a person in a bedroom", the third electronic device 300 may generate the local map 532 corresponding to the bedroom, and the local map 532 corresponding to the bedroom may include a node representing the person, a node representing another electronic device (e.g., a night lamp) included in the bedroom, and edges connecting the nodes to each other. Also, the third electronic device 300 may calculate a weight vector based on physical information (e.g., a distance) of the person and the other electronic device.

In an embodiment, the third electronic device 300 may update the integrated map 500 based on the local map (operation 453). Here, the updating of the integrated map 500 may include deleting an existing node, adding a new node, modifying a weight vector included in an existing edge, and calculating a weight vector to be included in a new edge. For example, when a node that is not in the integrated map 500 is included in the local map, the third electronic device 300 may add the new node to the integrated map 500. In another example, the third electronic device 300 may calculate weight vectors to be included in edges connecting the new node to other existing nodes, and in this case, a weight vector of an edge in the local map may be considered.

In an embodiment, the third electronic device 300 may store the updated integrated map 500 in the memory 310 and transmit the same to the first electronic device 200A and the second electronic device 200B when necessary.

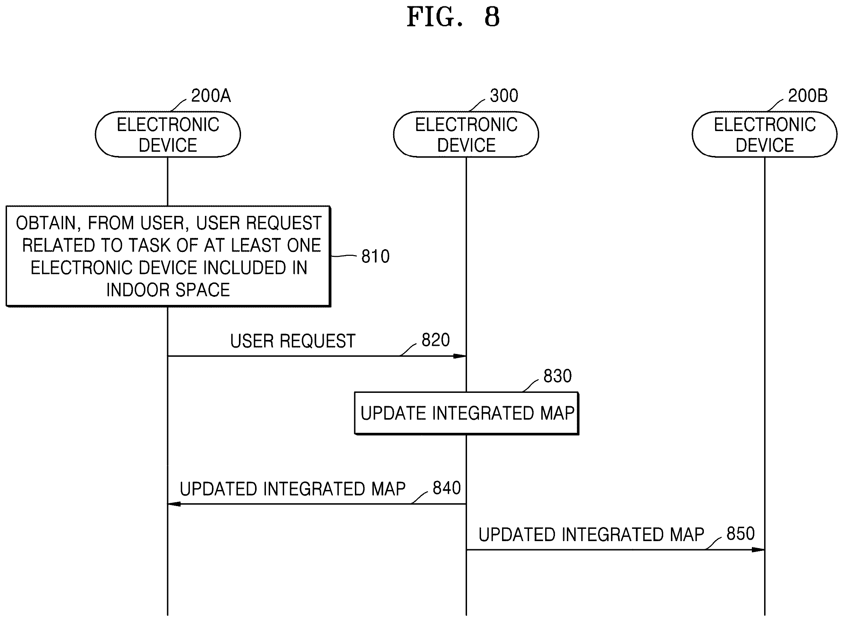

FIG. 8 is a diagram for describing a method by which electronic devices manage the integrated map 500 by reflecting a user request, according to an embodiment of the present disclosure.

The electronic devices according to an embodiment of the present disclosure may obtain a user request related to a task of at least one electronic device and update the integrated map 500 based on the user request to perform the task according to the user request.

For example, when a user request to minimize noise near a person is obtained (operation 810), the electronic devices may update the integrated map 500 based on the user request (operation 830). Then, when information indicating that there is a person in a bedroom is collected by one electronic device, the integrated map 500 may be updated based on the information (i.e., operations 430, 440, and 450 of FIG. 4). A robot cleaner that has received the updated integrated map 500 (i.e., operation 410 of FIG. 4) may obtain the information indicating that there is a person in a bedroom, and adjust dust suction strength to a lowest level so that noise is minimized in the bedroom (i.e., operation 420 of FIG. 4).

For example, processes in which the electronic devices obtains the user request and updates the integrated map 500 may be performed as follows.

In an embodiment, the first electronic device 200A may obtain, from the user, a user request related to a task of the at least one electronic device included in an indoor space (operation 810). The first electronic device 200A may obtain the user request in various manners, and the first electronic device 200A may include a sensor or an interface suitable for obtaining the user request. For example, when the first electronic device 200A includes a microphone as an input interface, the first electronic device 200A may obtain the user request in the form of a speech. In another example, when the first electronic device 200A is connected to a user terminal through a wired or wireless network, the first electronic device 200A may obtain the user request input by the user through the user terminal.

In an embodiment, the first electronic device 200A may transmit, to the third electronic device 300, the user request related to the task of the at least one electronic device included in the indoor space (operation 820).

In an embodiment, the third electronic device 300 may receive, from the first electronic device 200A, the user request related to the task of the at least one electronic device included in the indoor space (operation 820).

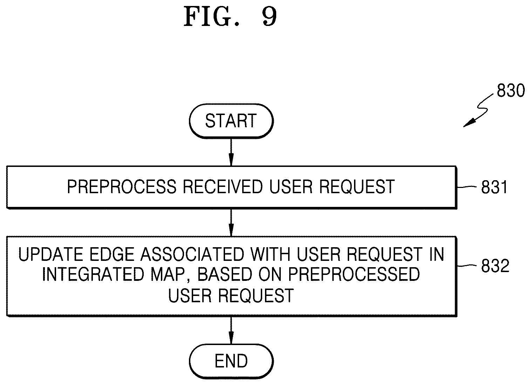

In an embodiment, the third electronic device 300 may update the integrated map 500 based on the received user request (operation 830). The updating of the integrated map 500 may include preprocessing the received user request and updating an edge associated with the user request in the integrated map based on the preprocessed user request. Updating of an integrated map will be described below with reference to FIG. 9.

In an embodiment, the third electronic device 300 may transmit the updated integrated map 500 to the first electronic device 200A and the second electronic device 200B (operations 840 and 850). The first electronic device 200A and the second electronic device 200B may perform operations of FIG. 4 on the updated integrated map to which the user request is reflected.

FIG. 9 is a diagram for describing a method by which the third electronic device 300 updates an integrated map, according to an embodiment of the present disclosure.

In an embodiment, the third electronic device 300 may preprocess the received user request (operation 831). Operation 831 may be understood as a process in which the third electronic device 300 extracts information required to update the integrated map 500 from the received user request and converts the same into a suitable form to configure the integrated map 500. Accordingly, a detailed preprocessing method may vary depending on a form of the received user request.

For example, when the received user request is in the form of a speech, the third electronic device 300 may perform natural language processing on the speech and extract the information associated with the task of the first electronic device 200A, such as a node, an edge, an attribute, and/or an action associated with the user request. Here, the attribute may be understood as a target to be adjusted in relation to the user request and the task of the first electronic device 200A. For example, the attribute may be determined according to content of the user request, such as a physical amount such as sound or time, a task of an electronic device, or a part of the task of the electronic device. The action may be understood as content of adjustment required for the attribute.

For example, when the user request in the form of a speech such as "I want lower sound in front of person" is received, the third electronic device 300 may perform natural language processing on the speech and extract, as a node, an edge, an attribute, and an action, information such as "node representing the person", "all edges connected to the node representing the person", "sound", and "lower".

In an embodiment, the third electronic device 300 may update an edge associated with the user request in the integrated map, based on the preprocessed user request (operation 832). The edge associated with the user request may be determined in operation 831, and the updating of the edge may be understood as updating a weight vector included in the edge based on the information extracted in operation 831.

In an embodiment, the weight vector included in the edge in the integrated map 500 may include values or vectors representing information about the user request. For example, the weight vector may include values or vectors for representing the information such as the "node representing the person", "all edges connected to the node representing the person", "sound", and "lower".

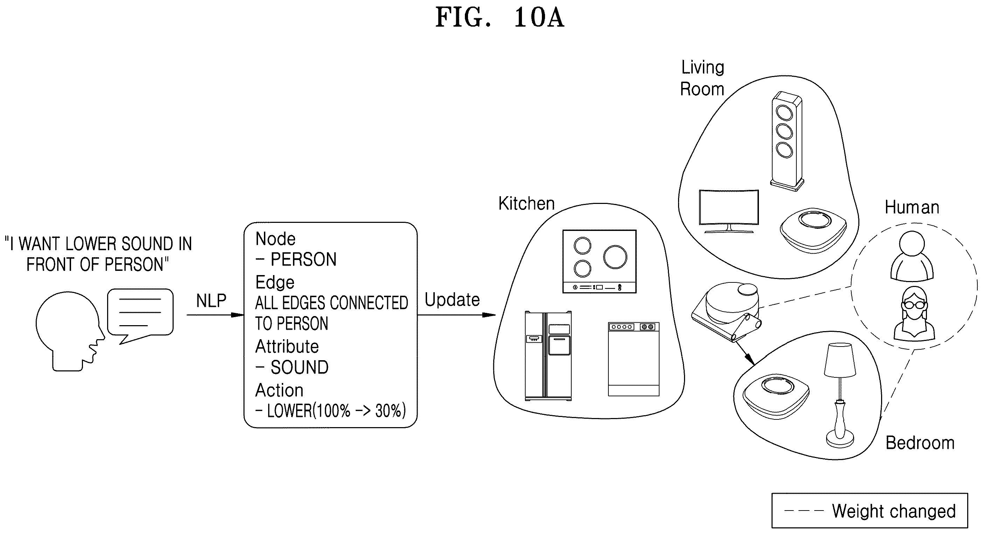

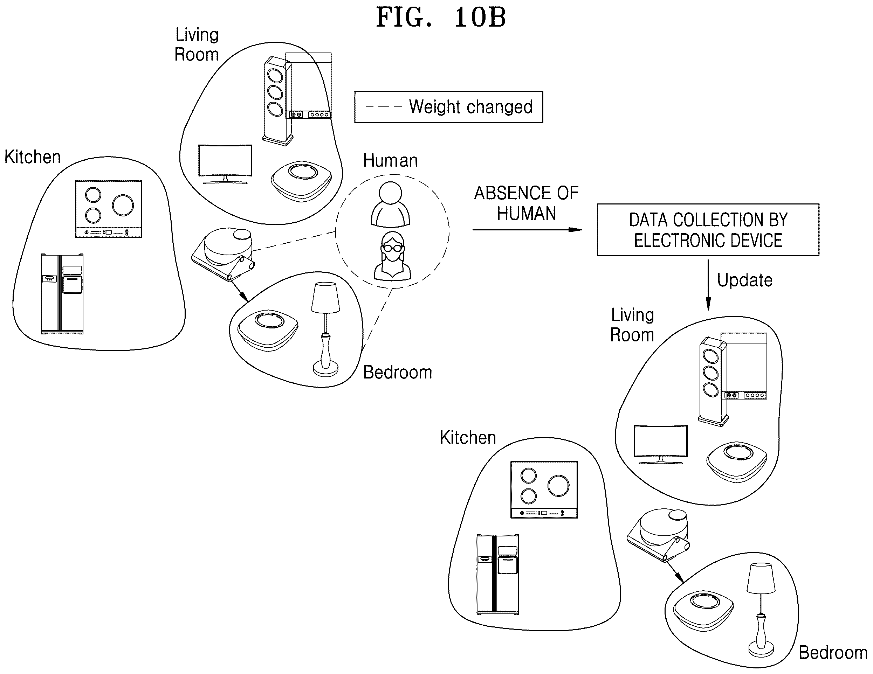

FIGS. 10A and 10B are diagrams for describing examples in which electronic devices reflect a user request to the integrated map 500 and use the integrated map 500, according to an embodiment of the present disclosure. FIGS. 10A and 10B illustrates examples when the received user request is a speech including content of "I want lower sound in front of person".

When the user request in the form of a speech is received from the first electronic device 200A, the third electronic device 300 may perform natural language processing on the speech according to operation 831 to extract information such as the "node representing a person" as a node associated with the user request, "all edges connected to the node representing the person" as an edge associated with the user request, "sound" as an attribute associated with the user request, and "lower" as an action associated with the user request.

The third electronic device 300 may update weight vectors of all edges connected to the node representing the person, based on the extracted information, according to operation 832. Here, a degree to which the weight vector of each edge changes may vary according to a location of the person. For example, when the third electronic device 300 has obtained the information indicating that there is a person in the bedroom from the first electronic device 200A according to operations 420 and 430 of FIG. 4, an edge between the node representing the person and nodes representing electronic devices located in the bedroom may be reinforced and have a greater value than an edge between the node representing the person and nodes representing other electronic devices.

The integrated map 500 updated based on the user request may be transmitted to the electronic devices in the indoor space, according to operations 840 and 850, and each electronic device that has received the updated integrated map 500 may change an operating mode to lower generated sound or adjust its task to operate when there is no person, according to operation 420. For example, a robot cleaner may minimize dust suction strength to reduce sound in the bedroom or adjust a cleaning time to clean the bedroom when a person leaves the bedroom, based on the updated integrated map 500.

The integrated map 500 to which the user request is reflected may also be updated according to operations of FIG. 4. For example, when information indicating that there is no person in the indoor space is received by the first electronic device 200A, the third electronic device 300 may delete a node representing the person and edges connected to the node representing the person from the integrated map 500, based on the information. Then, when the integrated map 500 from which the node and the edge related to the person have been deleted is transmitted to the first electronic device 200A and the second electronic device 200B, the first electronic device 200A and the second electronic device 200B may increase generated noise to an original level or perform a task that was not performed when there was a person, based on the received integrated map 500. For example, a robot cleaner may clean the bedroom based on the integrated map 500 from which the node and the edge related to the person have been deleted.

A method performed by a first electronic device, according to an embodiment of the present disclosure, may include receiving, from a third electronic device, an integrated map of an indoor space including the first electronic device and at least one second electronic device.

In an embodiment, the method may include adjusting, based on the integrated map 500, a task set to be performed by the first electronic device 200A (operation 420).

In an embodiment, the method may include collecting first surrounding information about the indoor space while the adjusted task is performed.

In an embodiment, the method may include transmitting, to the third electronic device 300, the collected first surrounding information to update the integrated map 500 (operation 440).

In an embodiment, the integrated map 500 may include second surrounding information about the indoor space, obtained by the third electronic device 300 from the at least one second electronic device 200B.

In an embodiment, the integrated map 500 may include a graph including a plurality of nodes representing the first electronic device 200A and the at least one second electronic device 200B, and a plurality of edges connecting the plurality of nodes to each other, wherein each of the plurality of edges may include a weight vector determined based on a relationship between electronic devices corresponding to two connected nodes.

In an embodiment, the relationship between the electronic devices corresponding to the two connected nodes comprises at least one of physical information of the electronic devices, information about a task of the electronic devices, surrounding information collected by the electronic devices by using a sensor, or information about interconnectivity between the electronic devices.

In an embodiment, the adjusting of the task (430) may include extracting, from the integrated map 500, information associated with the task (operation 431), applying the extracted information to an individual map for the task (operation 432), and adjusting the task based on the individual map (operation 433).

In an embodiment, the method may further include obtaining, from a user, a user request related to a task of at least one electronic device included in the indoor space (operation 810), and transmitting the user request to the third electronic device 300 (operation 820).

In an embodiment, the first electronic device 200A may be a dynamic electronic device and the at least one second electronic device 200B may be a static electronic device.

A method performed by a third electronic device, according to an embodiment of the present disclosure, may include receiving, from the first electronic device 200A, first surrounding information about an indoor space, collected by the first electronic device 200A (operation 440).

In an embodiment, the method may include updating, based on the received first surrounding information, an integrated map 500 about the indoor space including the first electronic device 200A and at least one second electronic device 200B (operation 450).

In an embodiment, the integrated map 500 may include second surrounding information about the indoor space, obtained by the third electronic device 300 from the at least one second electronic device 200B.

In an embodiment, the integrated map 500 may include a graph including a plurality of nodes representing the first electronic device 200A and the at least one second electronic device 200B, and a plurality of edges connecting the plurality of nodes to each other, wherein each of the plurality of edges may include a weight vector determined based on a relationship between electronic devices corresponding to two connected nodes.

In an embodiment, the relationship between the electronic devices corresponding to the two connected nodes comprises at least one of physical information of the electronic devices, information about a task of the electronic devices, surrounding information collected by the electronic devices by using a sensor, or information about interconnectivity between the electronic devices.

In an embodiment, the updating of the integrated map 500 (operation 450) may include preprocessing the received first surrounding information (operation 451), generating a local map by using the preprocessed first surrounding information (operation 452), and updating the integrated map 500 based on the local map (operation 453).

In an embodiment, the method may further include receiving, from the first electronic device 200A, a user request related to a task of at least one electronic device included in the indoor space (operation 820), and updating the integrated map 500 based on the received user request (operation 830).

In an embodiment, the updating of the integrated map 500 based on the received user request (operation 830) may include preprocessing the received user request (operation 831), and updating an edge in the integrated map 500, associated with the user request, based on the preprocessed user request (operation 832).

In an embodiment, the received user request is in the form of speech and the preprocessing of the received user request (operation 831) may include performing natural language processing on the received user request and extracting a node associated with the user request, an edge associated with the user request, an attribute associated with the user request, and an action associated with the user request.

A first electronic device according to an embodiment of the present disclosure may include the communicator 240, the sensor unit 220, the memory 260 storing one or more instructions, and the at least one processor 230 configured to execute the one or more instructions stored in the memory.

In an embodiment, the at least one processor 230 may be further configured to execute the one or more instructions to cause the first electronic device to receive, from the third electronic device 300 through the communicator 240, the integrated map 500 of the indoor space including the first electronic device 200A and the at least one second electronic device 200B.

In an embodiment, the at least one processor 230 may be further configured to execute the one or more instructions to cause the first electronic device to adjust a task set to be performed by the first electronic device 200A, based on the integrated map 500.

In an embodiment, the at least one processor 230 may be further configured to execute the one or more instructions to cause the first electronic device to collect, through the sensor unit 220, first surrounding information about the indoor space while the adjusted task is performed.

In an embodiment, the at least one processor 230 may be further configured to execute the one or more instructions to cause the first electronic device to transmit, to the third electronic device 300 through the communicator 240, the collected first surrounding information so as to update the integrated map 500.

In an embodiment, the integrated map 500 may include second surrounding information about the indoor space, obtained by the third electronic device 300 from the at least one second electronic device 200B.

In an embodiment, the integrated map 500 may include a graph including a plurality of nodes representing the first electronic device 200A and the at least one second electronic device 200B, and a plurality of edges connecting the plurality of nodes to each other, wherein each of the plurality of edges may include a weight vector determined based on a relationship between electronic devices corresponding to two connected nodes.

In an embodiment, the relationship between the electronic devices corresponding to the two connected nodes comprises at least one of physical information of the electronic devices, information about a task of the electronic devices, surrounding information collected by the electronic devices by using a sensor, or information about interconnectivity between the electronic devices.

In an embodiment, the at least one processor 230 may be further configured to execute the one or more instructions to cause the first electronic device to extract information associated with the task from the integrated map 500, apply the extracted information to an individual map for the task, and adjust the task based on the individual map.

In an embodiment, the at least one processor 230 may be further configured to execute the one or more instructions to cause the first electronic device to obtain, from a user through the user interface 250, a user request related to a task of at least one electronic device included in the indoor space, and transmit the user request to the third electronic device 300 through the communicator 240.

In an embodiment, the first electronic device 200A may be a dynamic electronic device and the at least one second electronic device 200B may be a static electronic device.

A third electronic device according to an embodiment of the present disclosure may include the communicator 330, the memory 310 storing one or more instructions, and at least one processor 320 configured to execute the one or more instructions stored in the memory 310.

In an embodiment, the at least one processor 320 may be further configured to execute the one or more instructions to cause the third electronic device to receive, from the first electronic device 200A through the communicator 330, first surrounding information about an indoor space, collected by the first electronic device 200A.

In an embodiment, the at least one processor 320 may be further configured to execute the one or more instructions to cause the third electronic device to update, based on the received first surrounding information, the integrated map 500 of the indoor space including the first electronic device 200A and at least one second electronic device 200B.

In an embodiment, the integrated map 500 may include second surrounding information about the indoor space, obtained by the third electronic device 300 from the at least one second electronic device 200B.

In an embodiment, the integrated map 500 may include a graph including a plurality of nodes representing the first electronic device 200A and the at least one second electronic device 200B, and a plurality of edges connecting the plurality of nodes to each other, wherein each of the plurality of edges may include a weight vector determined based on a relationship between electronic devices corresponding to two connected nodes.

In an embodiment, the relationship between the electronic devices corresponding to the two connected nodes comprises at least one of physical information of the electronic devices, information about a task of the electronic devices, surrounding information collected by the electronic devices by using a sensor, or information about interconnectivity between the electronic devices.

In an embodiment, the at least one processor 320 may be further configured to execute the one or more instructions to cause the third electronic device to preprocess the received first surrounding information, generate a local map by using the preprocessed first surrounding information, and update the integrated map 500 based on the local map.

In an embodiment, the at least one processor 320 may be further configured to execute the one or more instructions to cause the third electronic device to receive, from the first electronic device 200A through the communicator 330, a user request related to a task of at least one electronic device included in the indoor space, and update the integrated map 500 based on the received user request.

In an embodiment, the at least one processor 320 may be further configured to execute the one or more instructions to cause the third electronic device to preprocess the received user request and update an edge associated with the user request in the integrated map 500, based on the preprocessed user request.

In an embodiment, the received user request may be in the form of speech and the at least one processor 320 may be further configured to execute the one or more instructions to perform natural language processing on the received user request and extract a node associated with the user request, an edge associated with the user request, an attribute associated with the user request, and an action associated with the user request.

The above description of the present disclosure is provided for illustration, and it will be understood by one of ordinary skill in the art that various changes in form and details may be readily made therein without departing from essential features and the scope of the present disclosure as defined by the following claims. Accordingly, embodiments described above are examples in all aspects and are not limited. For example, each element described as a single type may be implemented in a distributed manner, and similarly, elements described as distributed may be implemented in a combined form.

The scope of the present disclosure is defined by the appended claims rather than the detailed description, and all changes or modifications within the scope of the appended claims and their equivalents will be construed as being included in the scope of the present disclosure.

## Claims

1. A method performed by a first electronic device (200A), the method comprising:
receiving, from a third electronic device (300), an integrated map (500) of an indoor space including the first electronic device (200A) and at least one second electronic device (200B) (410);
adjusting, based on the integrated map (500), a task set to be performed by the first electronic device (200A) (420);
collecting first surrounding information about the indoor space while the adjusted task is performed (430); and
transmitting, to the third electronic device (300), the collected first surrounding information to update the integrated map (500) (440).

2. The method of claim 1, wherein the integrated map (500) comprises
second surrounding information about the indoor space, obtained by the third electronic device (300) from the at least one second electronic device (200B).

3. The method of claim 1 or 2,
wherein the integrated map (500) comprises a graph including:
a plurality of nodes representing the first electronic device (200A) and the at least one second electronic device (200B); and
a plurality of edges connecting the plurality of nodes to each other,
wherein each of the plurality of edges includes a weight vector determined based on a relationship between electronic devices corresponding to two connected nodes.

4. The method of any one of claims 1 to 3, wherein the relationship between the electronic devices corresponding to the two connected nodes comprises at least one of physical information of the electronic devices, information about a task of the electronic devices, surrounding information collected by the electronic devices by using a sensor, or information about interconnectivity between the electronic devices.

5. The method of any one of claims 1 to 4, wherein the adjusting of the task (430) comprises:
extracting, from the integrated map (500), information associated with the task (431);
applying the extracted information to an individual map for the task (432); and
adjusting the task based on the individual map (433).

6. The method of any one of claims 1 to 5, further comprising:
obtaining, from a user, a user request related to a task of at least one electronic device included in the indoor space (810); and
transmitting the user request to the third electronic device (300) (820).

7. The method of any one of claims 1 to 6, wherein the first electronic device (200A) is a dynamic electronic device and the at least one second electronic device (200B) is a static electronic device.

8. A method performed by a third electronic device (300), the method comprising:
receiving, from a first electronic device (200A), first surrounding information about an indoor space, collected by the first electronic device (200A) (440); and
updating, based on the received first surrounding information, an integrated map (500) about the indoor space including the first electronic device (200A) and at least one second electronic device (200B),
wherein the integrated map (500) comprises second surrounding information about the indoor space, obtained by the third electronic device (300) from the at least one second electronic device (200B).

9. The method of claim 8, wherein the integrated map (500) comprises a graph including:
a plurality of nodes representing the first electronic device (200A) and the at least one second electronic device (200B); and
a plurality of edges connecting the plurality of nodes to each other,
wherein each of the plurality of edges includes a weight vector determined based on a relationship between electronic devices corresponding to two connected nodes.

10. The method of claim 8 or 9, wherein the relationship between the electronic devices corresponding to the two connected nodes comprises at least one of physical information of the electronic devices, information about a task of the electronic devices, surrounding information collected by the electronic devices by using a sensor, or information about interconnectivity between the electronic devices.

11. The method of any one of claims 8 to 10, wherein the updating of the integrated map (500) (450) comprises:
preprocessing the received first surrounding information (451);
generating a local map by using the preprocessed first surrounding information (452); and
updating the integrated map (500) based on the local map (453).

12. The method of any one of claims 8 to 11, further comprising:
receiving, from the first electronic device (200A), a user request related to a task of at least one electronic device included in the indoor space (820); and
updating the integrated map (500) based on the received user request (830).

13. The method of any one of claims 8 to 12, wherein the updating of the integrated map (500) based on the received user request (830) comprises:
preprocessing the received user request (831); and
updating an edge in the integrated map (500), associated with the user request, based on the preprocessed user request (832).

14. The method of any one of claims 8 to 13, wherein the received user request is in the form of speech and
the preprocessing of the received user request (831) comprises performing natural language processing on the received user request and extracting a node associated with the user request, an edge associated with the user request, an attribute associated with the user request, and an action associated with the user request.

15. A computer-readable recording medium having stored therein a computer program for performing the method of any one of claims 1 to 14.
